# EUROPÄISCHE PATENTANMELDUNG

(11) **EP 1 006 300 A2**
(43) Veröffentlichungstag der Anmeldung: **07.06.2000**
(21) Anmeldenummer: 99122957.6
(22) Anmeldetag: 18.11.1999
(51) Int. Cl.: F16J 15/16

(54) **Dichtungsanordnung**

(30) Priorität: 04.12.1998 DE 19856141
(71) Anmelder: Mannesmann Rexroth Aktiengesellschaft, 97816 Lohr am Main (DE)
(72) Erfinder: Dantlgraber, Jörg, 97816 Lohr (DE)
(74) Vertreter: Winter, Brandl, Fürniss, Hübner, Röss, Kaiser, Polte, Partnerschaft

(57) **Zusammenfassung**

Offenbart ist eine Dichtungsanordnung (8) zur Abdichtung zweier zueinander bewegbarer Bauteile (2,4), bei der einem Fluidraum (6) ein Druckraum (48) zugeordnet ist, der ein Fluid mit guten Schmiereigenschaften und/oder hoher Viskosität enthält, wobei der Fluidraum (6) und der Druckraum (48) über ein Druckübertragungselement, beispielsweise ein Membran (38) oder ein Kolben miteinander verbunden ist.

## Beschreibung

Die Erfindung betrifft eine Dichtungsanordnung zur Abdichtung zweier einen Fluidraum begrenzenden Bauteile gemäß dem Oberbegriff des Patentanspruchs 1.

Derartige Dichtungen sollen das Austreten oder Eindringen von Flüssigkeiten, Gasen oder festen Stoffen, beispielsweise Staub an den Trennstellen zwischen den Bauteilen verhindern oder verringern. Prinzipiell unterscheidet man statische und dynamische Dichtungen, wobei in der Regel die letztgenannten dynamischen Dichtungen, auch Bewegungsdichtungen genannt höhere konstruktive Anforderungen stellen, da bei zueinander beweglichen Bauteilen eine geringfügige Leckage in der Regel nicht oder nur mit hohem Aufwand auszuschließen ist.

Typische Anwendungsfälle für derartige Bewegungsdichtungen sind beispielsweise die Abdichtung der Kolbenstange eines Hydraulikzylinders oder die Abdichtung von Wellen gegenüber dem die Welle aufnehmenden Gehäuse, wie es beispielsweise bei Pumpen der Fall ist.

Besonders problematisch ist der Fall, wenn in den abzudichtenden Fluidräumen ein niedrigviskoses, schlechtschmierendes Fluid, beispielsweise Wasser, Benzin etc., enthalten ist, da diese Medien aufgrund ihrer Dünnflüssigkeit auch in geringste Trennspalte zwischen den Bauteilen eintreten können (Kapillarwirkung). Diese Leckageströmung wird verstärkt, wenn in dem das niedrigviskose Fluid enthaltenden Fluidraum ein höherer Druck als in der Umgebung oder in den benachbarten Raum herrscht, da das Druckgefälle über den Trennspalt die Leckageströmung unterstützt.

Ein weiteres Problem bei der Abdichtung von dünnflüssige Medien enthaltenden Fluidräumen besteht darin, daß derartige Fluide in der Regel auch schlechte Schmiereigenschatten aufweisen, so daß die sich bewegenden Bauteile im Dichtungs- und Lagerbereich einem übermäßigen Verschleiß unterworfen sein können.

Die vorbeschriebenen Nachteile lassen sich durch Einsatz von komplexen Dichtungsanordnungen, wie beispielsweise Axialdichtungen mit Gleitring und Gegenring zumindest teilweise beseitigen, derartige Dichtungsanordnung benötigen jedoch einen erheblichen Bauraum und es zeigte sich, daß auch diese Konstruktionen die Leckageströmung bei hohen Drücken nicht in der gewünschten Weise unterbinden können.

Demgegenüber liegt der Erfindung die Aufgabe zugrunde, eine Dichtungsanordnung zu schaffen, bei der die Leckageströmung mit minimalem vorrichtungstechnischen Aufwand verringert ist.

Diese Aufgabe wird durch eine Dichtungsanordnung mit den Merkmalen des Patentanspruchs 1 gelöst.

Durch die Maßnahme, einen mit einem vergleichsweise hochviskosen Fluid gefüllten Druckraum vorzusehen, der über ein Druckübertragungselement mit einem das niedrigviskose Fluid enthaltenden Fluidraum hydraulisch verbunden ist, kann in dem Druckraum ein dem Druck im Fluidraum entsprechender Druck aufgebaut werden, so daß das Druckgefälle über den Dichtungs- oder Trennepalt verringert wird oder gleich Null ist. Aufgrund der geringeren Druckdifferenz wird entsprechend auch die Leckageströmung vom Fluidraum über die zugeordnete Dichtung vom Druckraum verringert. Das Fluid im Druckraum ist hochviskos und hat erheblich bessere Schmiereigenschaften als das niedrigviskose Fluid im Fluidraum, so daß eine wesentlich bessere Schmierung der gegeneinander bewegten Bauteile als beim Stand der Technik erzielbar ist.

Der das hochviskose Fluid enthaltende Druckraum ist über eine weitere Dichtung (Außendichtung) gegenüber der Umgebung oder einem weiteren Fluidraum abgedichtet. Die Leckageströmung über diese Dichtung ist wesentlich geringer als die Leckageströmung vom Fluidraum in den Druckraum, da diese Dichtung lediglich mit dem hochviskosen Fluid beaufschlagt ist.

Das Druckübertragungselement zwischen den beiden Räumen kann eine Membran, ein Kolben oder ein ähnliches Bauelement sein.

Für den Fall, daß im Fluidraum ein extrem hoher Druck herrscht, wie er beispielsweise bei Axialkolbenpumpen auftreten kann, können mehrere Druckräume hintereinander geschaltet werden, wobei eine stufenweise Druckreduzierung durch Einsatz von Stufenkolben als Druckübertragungselemente erfolgt.

Eine besonders kompakte Dichtungsanordnung erhält man, wenn der Druckraum zumindest abschnittsweise von einem Dichtungskörper begrenzt ist, in dem die Dichtung und die Außendichtung gelagert sind und der desweiteren zwei Teilkammern aufweist, die durch das Druckübertragungselement getrennt sind und die mit dem Fluidraum bzw. mit dem Druckraum hydraulisch verbunden sind.

Die erfindungsgemäße Konstruktion läßt sich vorteilhaft bei Aufgabenstellungen anwenden, bei denen im abzudichtenden Fluidraum Wasser oder Benzin aufgenommen ist. Besonders gute Abdichtungsergebnisse erzielt man in diesem Fall durch Verwendung von Glykol als Füllung für den Druckraum, da diese Flüssigkeit vergleichsweise gute Schmiereigenschaften aufweist und aufgrund seiner Viskosität wenig Tendenz zeigt, in die Dichtspalte einzudringen.

Ein bevorzugtes Anwendungsgebiet der Dichtungsanordnung ist die Abdichtung von Kolbenstangen oder von Wellen, beispielsweise einer Hochdruckpumpe.

Für den Fall, daß eine Kolbenstange eines Hydraulikzylinders abgedichtet werden soll, kann im Bereich des Dichtungskörpers ein Führungsteil für die Kolbenstange gelagert sein. Dieses Führungsteil wird dann vorzugsweise in dem das hochviskose Medium enthaltenden Druckraum aufgenommen.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 eine Schnittdarstellung einer Dichtungsanordnung für eine Welle und
Figur 2 eine Schnittdarstellung einer Dichtungsanordnung für eine Kolbenstange.

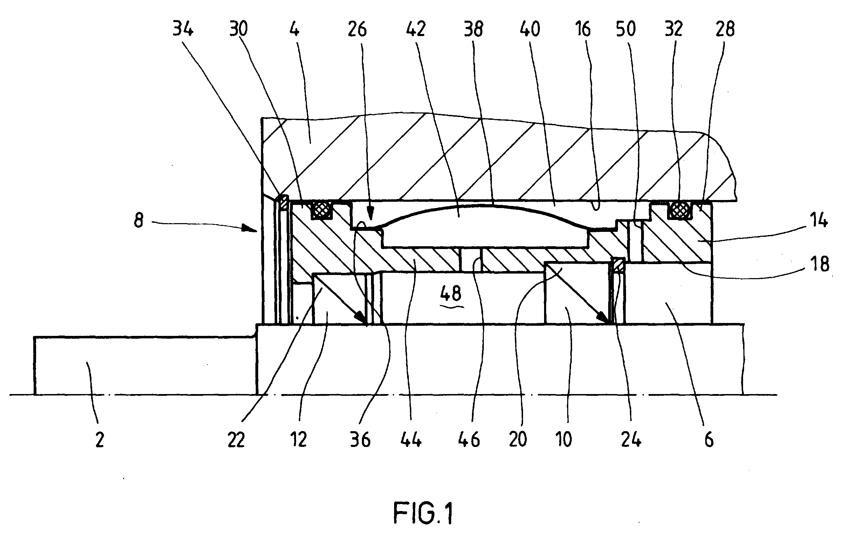

Figur 1 zeigt den Schnitt durch eine Anordnung, bei der eine Welle 2 drehbar in einem Gehäuse 4 gelagert ist. Die Welle 2 und das Gehäuse 4 begrenzen zumindest abschnittsweise einen Fluidraum 6, der über eine Dichtungsanordnung 8 abgedichtet ist. Der Fluidraum 6 enthält eine Flüssigkeit, die vergleichsweise dünnflüssig ist und keine guten Schmiereigenschaften aufweist.

Derartige Anordnungen können beispielsweise bei einer Pumpe auftreten, bei der das Druckmittel Wasser, Benzin oder Ähnliches ist.

Die in Figur 1 dargestellte Dichtungsanordnung 8 hat eine Innendichtung 10 und eine Außendichtung 12, die axialbeabstandet gleitend am Außenumfang der Welle 2 anliegen.

Die beiden Dichtungen 10, 12 haben einen bekannten Aufbau und können beispielsweise als Radial-Wellendichtring mit einem Versteifungsring und einem Dichtungsring ausgebildet werden. Selbstverständlich sind auch andere Bauarten, wie beispielsweise Packungen, Nutringe etc. einsetzbar.

Zwischen den Dichtungskörpern 10, 12 und der Innenumfangswandung 16 einer Lagerbohrung des Gehäuses 4 ist ein Dichtungskörper 14 angeordnet, über den die Dichtungen 10, 12 gegen die Welle 2 vorgespannt sind.

Bei dem in Figur 1 dargestellten Ausführungsbeispiel ist der Dichtungskörper 14 als Buchse ausgeführt, deren Axialbohrung 18 sich zum außendichtungsseitigen Ende hin stufenförmig verjüngt. Durch diese stufenförmigen Verjüngungen werden zwei Axialschultern 20, 22 ausgebildet, an denen die beiden Dichtungen 10 bzw. 12 abgestützt sind. Die Innendichtung 10 ist desweiteren durch einen Ring 24 in Axialrichtung gesichert.

In der Außenumfangsfläche des Dichtungskörpers 14 ist eine sich zur Mitte hin stufenförmig vertiefende Nut 26 oder Ausnehmung ausgebildet. In den an die Nut 26 angrenzenden Radialbünden 28, 30 sind Aufnahmenuten für O-Ringe 32 ausgebildet. Die axiale Sicherung des Dichtungskörper 14 übernimmt ein Ring 34, der in die Innenumfangswandung 16 eingesetzt ist.

Die Nut 26 hat ein Stützschulter 36, auf der eine Membran 38 abgestützt ist. Durch diese Membran 38 wird die Nut 26 in eine äußere Teilkammer 40 und eine innere Teilkammer 42 unterteilt.

Die innere Teilkammer 42 kann sich entlang des gesamten Umfangs des Dichtungskörpers 14 oder aber lediglich über einen Teilbereich des Dichtungskörpers 14 erstrecken, so daß die Membran 38 entsprechend umlaufend oder lediglich den Teilbereich dichtend abdeckend ausgebildet ist.

In dem verbleibenden Mittelsteg 44 des Dichtungskörpers 14 ist eine Radialbohrung 46 ausgebildet, über die ein von den beiden Dichtungen 10, 12, dem Außenumfang der Welle 2 und dem Mittelsteg 44 begrenzter Druckraum 48 mit der inneren Teilkammer 42 verbunden ist.

Die äußere Teilkammer 40 und der Fluidraum 6 sind über eine Verbindungsbohrung 50 im rechten (Ansicht nach Figur 1) Endabschnitt des Dichtungskörpers 14 verbunden.

Die beiden vorgenannten, zwischen Gehäuse 4 und Dichtungskörper 14 angeordneten O-Ringe 32 reichen aus, um eine Leckageströmung entlang der Gehäuseumfangswandung zu unterbinden, da Dichtungskörper 14 und Gehäuse 4 drehtest miteinander verbunden sind, so daß die Abdichtung wesentlich einfacher herbeiführbar ist.

Die problematische Abdichtung im Bereich der Welle 2 wird durch den vorbeschriebenen Aufbau der Dichtungsanordnung 8 wesentlich vereinfacht.

Wie eingangs erwähnt, ist der Fluidraum 6 mit einem niedrigviskosen, schlechtschmierenden Fluid, beispielsweise Wasser gefüllt.

Der Druckraum 48 ist mit einem hochviskosen (zähflüssigen) Material mit vergleichsweise guten Schmiereigenschaften wie Glykol gefüllt. Das in der Fluidkammer 6 enthaltene niederigviskose Fluid kann über die Verbindungsbohrung 50 in die äußere Teilkammer eintreten, während das hochviskose Fluid über die Radialbohrung 46 in die innere Teilkammer 46 gelangt.

Der in der Fluidkammer 6 herrschende Fluiddruck wird über die Verbindungsbohrung 50, das Fluid in der äußeren Teilkammer 40, die Membran 38 auf das Druckfluid in der inneren Teilkammer 42 und damit über die Verbindungsbohrung 46 auf das Druckfluid im Druckraum 48 übertragen. Dementsprechend liegt an beiden Seiten der Dichtlippe (nicht dargestellt) der Innendichtung 10 im wesentlichen der gleiche Druck an, so daß die Leckageströmung entlang des Außenumfangs der Welle 2 aufgrund einer Druckdifferenz zwischen dem Fluidraum 6 und dem Druckraum 48 nahezu ausgeschlossen ist. Es kann allenfalls noch eine Leckage aufgrund einer Kapillarwirkung auftreten, die jedoch akzeptabel ist. Bei der Auslegung der Dichtungsanordnung muß darauf geachtet werden, daß das Druckmittel inert mit Bezug zum niedrigviskosen Fluid in der Fluidkammer 6 ist, so daß keine Reaktionen, physikalischen Veränderungen etc. durch Mischen der beiden Fluide auftreten können.

Eine Leckageströmung über die Dichtungslippe der Außendichtung 12 wird dadurch minimiert, daß die vorliegende Druckdifferenz zwischen dem Druckraum 48 und der Umgebung in der Regel nicht groß genug ist, um eine Leckageströmung der hochviskosen Flüssigkeit zu bewirken. D.h. durch Zwischenschaltung des mit hochviskosen Fluid gefüllten Druckraums 48 kann eine Leckageströmung des niedrigviskosen Fluids 6 vom Druckraum 6 zur Umgebung hin nahezu ausgeschlossen werden, so daß die in Figur 1 dargestellte Dichtungsanordnung bekannten Lösungen überlegen sein dürfte.

Anstelle der beim vorbeschriebenen Ausführungsbeispiel verwendeten Membran 38 kann auch ein anderes Druckübertragungselement, beispielsweise ein Kolben verwendet werden, der axial verschiebbar in einer Radialbohrung des Dichtungskörpers 14 geführt ist und über den die Teilkammern 40, 42 voneinander getrennt sind.

Der Hub des Druckübertragungselements (Membran 38, Kolben) ist so ausgelegt, daß die nicht auszuschließenden Leckageverluste des hochviskosen Fluide über die berechnete Lebensdauer der Dichtungsanordnung ausgeglichen werden können. D.h. es ist keine Nachtüllung des Druckraums 48 vorgesehen. Selbstverständlich könnte bei anderen Ausführungsbeispielen eine Nachtüllung des Druckraums 48 durch entsprechende Einrichtungen möglich sein.

In dem Fall, in dem im Druckraum 6 ein extrem hoher Druck herrscht (beispielweise bei Hochdruckpumpen) könnte ein Stufenkolben als Druckübertragungselement verwendet werden, so daß im Druckraum 48 ein geringerer Druck als im Fluidraum 6 herrscht. Bei besonders hohen Druckdifferenzen könnten mehrere Stufenkolben hintereinander geschaltet werden, so daß der Druck in der Dichtungsanordnung schrittweise vom Maximaldruck im Fluidraum 6 auf einen Druck abgesenkt wird, bei dem die Leckage über die Außendichtung 12 auf ein Minimum reduziert ist.

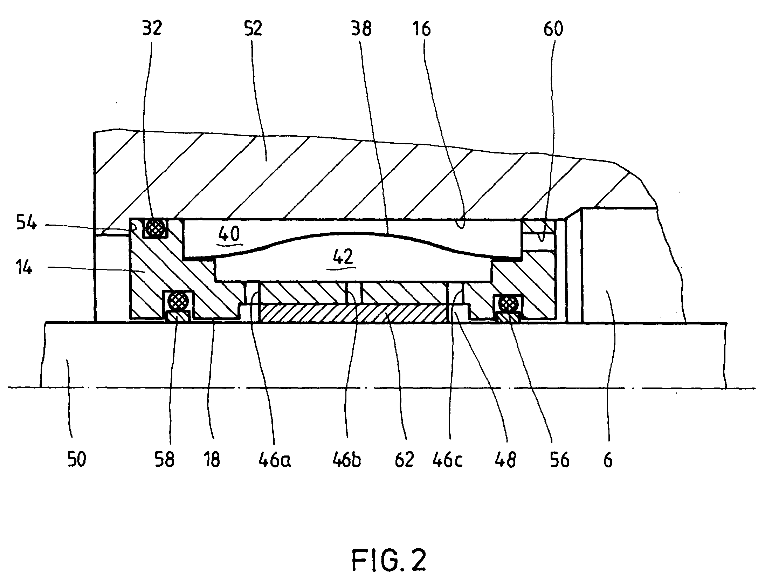

In Figur 2 ist ein Ausführungsbeispiel dargestellt, bei dem eine Kolbenstange 50 in einem Gehäuse, beispielsweise einem Zylinder 52 eines Hydraulikzylinders axialverschiebbar geführt ist. Bei dem Ausführungsbeispiel gemäß Figur 2 werden für einander entsprechende Bauelemente die gleichen Bezugszeichen wie bei dem in Figur 1 dargestellten Ausführungsbeispiel verwendet. Der Dichtungskörper 14 ist an einer Radialstufe 54 des Zylinders 52 abgestützt und bildet mit der Innenumfangswandung 16 eine innere Teilkammer 42 und eine äußere Teilkammer 40 die wie beim vorbeschriebenen Ausführungsbeispiel durch eine Membran 38 voneinander getrennt sind.

Die Abdichtung des Dichtungskörpers 14 mit Bezug zum Zylinder 52 erfolgt wiederum über eine geeignete Dichtungseinrichtung beispielsweise einen O-Ring 32.

Die Abdichtung gegenüber der Kolbenstange 50 erfolgt über einen inneren Gleitring (Axialdichtung) 56 und einen äußeren Gleitring 52. Diese sind in Innenumfangsnuten des buchsenförmigen Dichtungskörpers 14 eingesetzt.

Die Axialbohrung 18 des Dichtungskörpers 14 ist im Mittelbereich zum Druckraum 48 radial erweitert, wobei die Verbindung zu diesem ringförmigen Druckraum 48 zur inneren Teilkammer 42 über eine Vielzahl von Verbindungsbohrungen 46 a, b, c erfolgt.

Die Verbindung zwischen dem Zylinder-Ringraum (Fluidraum 6) und der äußeren Teilkammer 40 erfolgt beim gezeigten Ausführungsbeispiel über einen Axialdurchbruch 60 am in Figur 2 rechten Endabschnitt des Dichtungskörpers 14.

Im Druckraum 48 ist ein ringförmiges Führungsband 62 aufgenommen, über das eine Axialführung der Kolbenstange 50 erfolgt.

Die Dichtungen 56, 58 haben einen herkömmlichen Aufbau und könne beispielsweise als Nutring ausgeführt sein, der über einen Versteifungs- oder Verspannring gegen die Dichtfläche vorgespannt ist.

Bei besonders hohen Anforderungen können auch Gleitringdichtungen oder ähnliches verwendet werden.

Die Wirkungsweise des in Figur 2 dargestellten Ausführungsbeispiels ist die gleiche wie bei dem eingangs beschriebenen Ausführungsbeispiel. D.h., die äußere Teilkammer 40 ist mit der niedrigviskosen Flüssigkeit, beispielsweise Wasser gefüllt und der Druck in der Fluidkammer 6 wird über den Durchbruch 60 in die äußere Teilkammer 40 übertragen. Dieser im niedrigviskosen Fluid herrschende Druck wird über die Membran 38 und die Radialdurchbrüche 46 in die Druckkammer 48 übertragen, die wie beim vorbeschriebenen Ausführungsbeispiel mit einem hochviskosen Fluid mit guten Schmiereigenschaften gefüllt ist. Selbstverständlich ist auch die innere Teilkammer 42 mit diesem Fluid gefüllt. Entsprechend liegt beidseitig der inneren Gleitdichtung 56 etwa der gleich Druck an, so daß die Leckageströmung von der Fluidkammer 6 in den Druckraum 48 unterbunden ist.

Die Leckageströmung von dem Druckraum 48 zur Umgebung über die äußere Gleitdichtung 48 ist aufgrund der hohen Viskosität des Druckfluides minimal.

Diese vorbeschriebene Konstruktion ist beispielsweise bei Hydraulikzylindern einsetzbar, die bei Wasseraufzügen etc. verwendet werden.

Selbstverständlich kann auch bei der Figur 2 beschriebenen Konstruktion eine mehrstufige Hintereinanderschaltung von mehreren Stufenkolben als Übertragungselement erfolgen, um einen extrem hohen Druck im Fluidraum 6 schrittweise auf ein Niveau abzusenken, so daß eine Leckageströmung über die einzelnen Dichtungsstufen minimiert ist. Als einfachste Ausführung könnte ein einzelner Stufenkolben verwendet werden, um im Druckraum ein mittleres Druckniveau zwischen dem Umgebungsdruck und dem Druck im Fluidraum 6 einzustellen.

Offenbart ist eine Dichtungsanordnung zur Abdichtung zweier zueinander bewegbarer Bauteile, bei der einem Fluidraum ein Druckraum zugeordnet ist, der ein Fluid mit guten Schmiereigenschaften und/oder hoher Viskosität enthält, wobei der Fluidraum und der Druckraum über ein Druckübertragungselement, beispielsweise ein Membran oder ein Kolben miteinander verbunden sind.

## Patentansprüche

1. Dichtungsanordnung zur Abdichtung eines ein Fluid enthaltenden Fluidraumes (6), in den ein Betätigungselement (2, 50) eintaucht, mit einer Dichtung (10, 56) die am Betätigungselement (2, 50) dichtend anliegt, gekennzeichnet durch einen an die Dichtung (2, 56) angrenzenden Druckraum (48), der mit einem Fluid vergleichsweise hoher Viskosität gefüllt ist und der über ein Druckübertragungselement (38) mit dem Fluidraum (6) in Wirkverbindung steht, so daß auf die Dichtung einerseits der im Fluidraum (6) herrschende Druck und andererseits der im Druckraum (48) herrschende Druck wirkt.

2. Dichtungsanordnung nach Patentanspruchs 1, dadurch gekennzeichnet, daß der Druckraum von einer Außendichtung (58) zur Umgebung hin abgedichtet ist.

3. Dichtungsanordnung nach Patentanspruch 1 oder 2, dadurch gekennzeichnet, daß das Druckübertragungselement eine Membran (38) oder ein Kolben ist.

4. Dichtungsanordnung nach Patentanspruch 3, dadurch gekennzeichnet, daß der Kolben ein Stufenkolben ist.

5. Dichtungsanordnung nach einem der vorhergehenden Patentansprüche, dadurch gekennzeichnet, daß der Druckraum (48) in einem Dichtungskörper (14) ausgebildet ist, in dem die Dichtung (56) und die Außendichtung (58) gelagert sind und der vom Druckübertragungselement (38) getrennte Teilkammern (40, 42) aufweist, die mit dem Fluidraum (6) bzw. dem Druckraum (48) verbunden sind.

6. Dichtungsanordnung nach einem der vorhergehenden Patentansprüche dadurch gekennzeichnet, daß das Fluid Wasser, Benzin oder ähnliches und/oder das hochviskose Fluid Glykol ist.

7. Dichtungsanordnung nach einem der vorhergehenden Patentansprüche, dadurch gekennzeichnet, daß das Betätigungselement (38) eine Kolbenstange (50) oder eine Welle (2) ist.

8. Dichtungsanordnung nach Patentanspruch 5 und 7, dadurch gekennzeichnet, daß in dem Dichtungskörper (14) ein Führungsteil (62) für die Kolbenstange (50) gelagert ist.

9. Dichtungsanordnung nach Patentanspruch 2 und einem der Patentansprüche 4 bis 8 dadurch gekennzeichnet, daß mehrere Stufenkolben und/oder Druckübertragungselemente hintereinander geschaltet sind, so daß der auf die Außendichtung (12, 58) wirkende Druck auf ein vorbestimmtes Niveau unterhalb des Drucks im Fluidraum (6) absenkbar ist.
